# DEMANDE DE BREVET EUROPEEN

(11) **EP 2 921 417 A1**
(43) Date de publication de la demande: **23.09.2015**
(21) Numéro de dépôt: 15159452.0
(22) Date de dépôt: 17.03.2015
(51) Int. Cl.: B65D 1/02, A61J 1/06, B65D 1/09

(54) **Ampoule destinée à stocker et délivrer un fluide**

(30) Priorité: 19.03.2014 FR 1452262
(71) Demandeur: Seriplast, 01117 Oyonnax (FR)
(72) Inventeur: Tartaglione, André, 01400 Chanoz Chatenay (FR)
(74) Mandataire: Delorme, Nicolas

(57) **Abrégé**

L'ampoule (100) comprenant :
- un corps (10) définissant un réservoir (1) destiné à contenir le fluide (4), le corps (10) comprenant un col (2) et un obturateur (7) relié au col par une zone sécable (5),
- un embout (3) destiné à permettre la délivrance du fluide (4) contenu dans le réservoir (1) hors de l'ampoule (100), l'embout (3) étant fixé à l'intérieur du col (2), l'obturateur (7) étant configuré pour obturer l'embout (3), et
- un organe de retenue (6) configuré pour retenir l'obturateur (7) dans une position d'obturation de l'embout (3) après rupture de la zone sécable (5), l'organe de retenue (6) étant configuré pour coopérer avec le col (2) de sorte à être fixé de façon amovible au col (2).

## Description

La présente invention concerne une ampoule destinée à stocker et délivrer un fluide.

Les ampoules conventionnelles comprennent généralement une portion sécable entre une tête et un réservoir contenant un fluide. La portion sécable est rompue par exemple manuellement de sorte à détacher la tête du réservoir pour distribuer le fluide. Mais une fois la tête détachée de l'ampoule, le fluide est facilement contaminé, notamment par l'air, et l'ampoule est difficilement transportable sans risquer le renversement du fluide.

Un des buts de la présente invention vise à pallier au moins l'un de ces inconvénients. A cet effet, la présente invention propose une ampoule, destinée à stocker et délivrer un fluide, l'ampoule comprenant :
- un corps définissant un réservoir destiné à contenir le fluide, le corps comprenant un col et un obturateur, l'obturateur étant relié au col par une zone sécable,
- un embout destiné à permettre la délivrance du fluide contenu dans le réservoir hors de l'ampoule, l'embout étant fixé à l'intérieur du col, l'obturateur étant configuré pour obturer l'embout, et
- un organe de retenue configuré pour retenir l'obturateur dans une position d'obturation de l'embout après rupture de la zone sécable, l'organe de retenue étant configuré pour coopérer avec le col de sorte à être fixé de façon amovible au col.

Dans cette configuration, il est ainsi possible de refermer l'ampoule après rupture de la zone sécable. Il est alors facile de transporter l'ampoule dans un sac par exemple sans risque d'écoulement du fluide. Le contact entre le fluide et les contaminants provenant de l'air extérieur est de plus évité. La conservation du fluide est améliorée de sorte que l'ampoule peut être réutilisée sur une plus longue durée.

Selon une disposition, l'organe de retenue est monté de façon amovible sur l'obturateur. Cette configuration permet de retenir l'obturateur dans une position d'obturation de l'embout après rupture de la zone sécable. Réciproquement, le retrait de l'organe de retenue du col permet le retrait de l'obturateur de ce dernier pour la délivrance du fluide contenu dans l'ampoule.

En particulier, l'organe de retenue est monté mobile sur l'embout de l'ampoule.

Avantageusement, l'organe de retenue comprend des moyens de fixation agencés pour coopérer avec des moyens de fixation complémentaires du col de sorte à fixer par rotation l'organe de retenue au col.

Ces moyens de fixation sont, par exemple, deux filetages complémentaires qui permettent une fixation par rotation facile, amovible et durable dans le temps.

De préférence, l'organe de retenue est configuré pour recouvrir la zone sécable de sorte protéger la zone sécable d'une rupture accidentelle. Cette configuration garantit ainsi une protection contre une rupture non souhaitée de la zone sécable.

L'organe de retenue présente globalement une forme de bague comprenant un filetage adapté pour être vissé au filetage du col, la bague étant configurée pour recouvrir la zone sécable entre l'obturateur et le col.

Avantageusement, le col comporte une nervure et l'organe de retenue comprend une portion d'extrémité, la portion d'extrémité étant configurée pour venir en butée contre la nervure dans une position de fixation de l'organe de retenue au col. Ceci génère une résistance à la fin de la fixation de l'organe de retenue au col délimitant la course de vissage de l'organe de retenue. Ainsi, les risques d'endommagements des deux éléments sont évités.

De préférence, l'obturateur comprend deux butées primaires et l'organe de retenue comprend un épaulement agencé pour coopérer successivement avec chacune des deux butées primaires de sorte que l'organe de retenue monté sur l'obturateur est mobile en translation entre les deux butées primaires par rapport à l'obturateur de sorte à découvrir la zone sécable. Cette configuration permet d'accéder à la zone sécable lorsque l'on souhaite utiliser l'ampoule tout en limitant la course de l'organe de retenue sur l'obturateur. Les risques de perdre l'organe de retenue sont alors limités.

Avantageusement, l'ampoule comprend un organe de sécurité monté libre en rotation sur l'obturateur et configuré pour couvrir l'organe de retenue, l'organe de sécurité et l'organe de retenue étant mobiles en rotation l'un par rapport à l'autre entre une position d'accouplement, dans laquelle l'organe de sécurité est solidaire de l'organe de retenue, et une position de désaccouplement, dans laquelle l'organe de sécurité est libre en rotation par rapport à l'organe de retenue. Ainsi, l'organe de sécurité empêche l'accès direct à l'organe de retenue. Ce dernier ne peut pas être détaché du col s'il n'est pas en position d'accouplement avec l'organe de sécurité. En effet, dans cette configuration, il est nécessaire de placer l'organe de sécurité et l'organe de retenue en position d'accouplement pour que la rotation de l'organe de sécurité entraine la rotation de l'organe de retenue et son dévissage du col.

De préférence, l'organe de sécurité comprend au moins un créneau et l'organe de retenue comprend au moins une encoche configurée pour coopérer avec le créneau de sorte que l'application d'une pression sur l'organe de sécurité suivant une direction axiale orientée vers l'organe de retenue entraîne l'engrènement du créneau et de l'encoche et entraine le déplacement de l'organe de sécurité et de l'organe de retenue de la position de désaccouplement à la position d'accouplement. Or, il est connu qu'un enfant voulant ouvrir un flacon n'est capable que d'exercer un mouvement consistant à tirer sur le bouchon du flacon tout en le dévissant. Toutefois ce mouvement appliqué à l'ampoule de la présente invention conduit inévitablement à placer l'organe de sécurité et l'organe de retenue en position de désaccouplement. Ainsi, l'organe de sécurité tourne dans le vide sans agir sur l'organe de retenue de sorte à procurer une sécurité pour un enfant.

Selon une disposition, l'organe de sécurité comporte deux butées secondaires et la portion d'extrémité de l'organe de retenue comporte un élément saillant configuré pour coopérer successivement avec chacune des deux butées secondaires de sorte à délimiter le déplacement dans une direction axiale de l'organe de sécurité par rapport à l'organe de retenue entre la position d'accouplement et la position de désaccouplement. Ainsi, cette configuration permet de limiter la course de l'organe de sécurité par rapport à l'organe de retenue de sorte que l'organe de retenue retient l'organe de sécurité. L'obturateur, l'organe de retenue et l'organe de sécurité sont alors retenus ensemble de sorte à éviter les risques de perte.

Selon une possibilité, le corps comprend au moins une paroi latérale faiblement déformable et une paroi de fond encliquetée sur la au moins une paroi latérale et l'embout est en matériau fortement déformable tel que l'élastomère thermoplastique TPE. Cette configuration permet le remplissage du réservoir avant d'encliqueter la paroi de fond. Une pression appliquée sur la paroi latérale permet l'éjection de fluide par l'embout souple, soit par jet soit par goutte à goutte.

Selon une variante, le corps comprend au moins une paroi latérale fortement déformable comportant une portion d'extrémité soudée sur elle-même de sorte à obturer le fond du corps. En d'autres termes, la paroi latérale présente la forme d'un tube de pâte à dent. Ce type d'ampoule permet l'expulsion d'un fluide très pâteux.

Selon une disposition, l'obturateur et la au moins une paroi latérale du corps sont formés par une seule pièce de matière polymérique obtenue par injection et dans laquelle la zone sécable est un rétreint comportant une épaisseur amincie de matière. Il est ainsi possible de rompre manuellement la matière au niveau de la zone sécable.

Selon une autre variante, le corps comprend au moins une paroi latérale très faiblement déformable, tel que du verre, et une paroi de fond fortement déformable. Il est alors possible d'expulser le fluide en exerçant une pression sur la paroi de fond. Dans cette variante, le corps en verre comprenant le réservoir, le col et l'obturateur avec la zone sécable est monobloc.

D'autres aspects, buts et avantages de la présente invention apparaîtront mieux à la lecture de la description suivante d'une mode de réalisation de celle-ci, donné à titre d'exemple non limitatif et faite en référence aux dessins annexés. Les figures ne respectent pas nécessairement l'échelle de tous les éléments représentés de sorte à améliorer leur lisibilité. Dans la suite de la description, par souci de simplification, des éléments identiques, similaires ou équivalents des différentes formes de réalisation portent les mêmes références numériques.
La figure 1 représente une vue en coupe d'une ampoule selon un mode de réalisation de l'invention.
La figure 2 illustre une vue en coupe en éclaté d'une région de l'ampoule représentée à la figure 1.
La figure 3 illustre une vue en coupe d'un embout de l'ampoule représentée à la figure 1.
La figure 4 illustre une vue en coupe d'un obturateur de l'ampoule représentée à la figure 1.
Les figures 5 et 6 illustrent une vue en coupe d'un organe de retenue et d'un organe de sécurité de l'ampoule représentée à la figure 1.
Les figures 7a à 7f illustrent schématiquement un exemple d'utilisation de l'ampoule représentée à la figure 1.

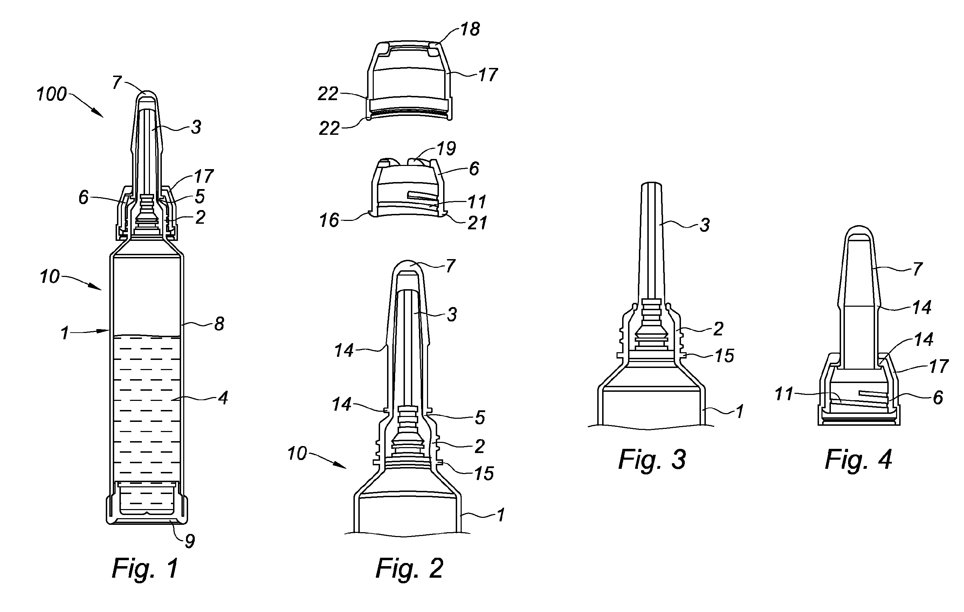

La figure 1 illustre une ampoule 100 comprenant un corps 10 définissant un réservoir 1 pour fluide et comprenant un col 2 et un obturateur 7 relié au col 2 par une zone sécable 5, l'ampoule 100 comprenant en outre un embout 3 destiné à distribuer le fluide 4 contenu dans le réservoir 1, et un organe de retenue 6 de l'obturateur 7 configuré pour obturer l'embout 3. Le corps 10 comprend au moins une paroi latérale 8 constituée en un matériau tel que du plastique faiblement déformable et une paroi de fond 9 est encliquetée de façon étanche au fond du réservoir 1. Cette configuration permet d'introduire le fluide 4 par le fond du réservoir 1 qui est ensuite fermé de façon étanche par encliquetage de la paroi de fond 9. Selon une variante non illustrée, le corps 10 comprend au moins une paroi latérale 8 constituée en un matériau fortement déformable permettant de délivrer des produits pâteux, tel que de la pate à dents, et le fond du réservoir 1 est constitué par une soudure de la paroi latérale 8 sur elle-même de sorte à former un réservoir 1 similaire au tube de pâte à dents. Selon encore une autre alternative non illustrée, le corps 10 comprend une paroi latérale 8 en matériau très peu déformable, tel que du verre, et la paroi de fond 9 est en matériau fortement déformable de sorte qu'une pression exercée sur la paroi de fond 9 réduise le volume intérieur du réservoir 1 conduisant à la délivrance de fluide 4.

Comme illustré aux figures 1 à 3, l'embout 3 est fixé à l'intérieur du col 2 suite à son introduction en force qui peut éventuellement être complétée par soudure pour une meilleure tenue au fil du temps. L'embout 3 est en matériau très déformable, tel qu'un élastomère thermoplastique TPE, de sorte à permettre la délivrance de fluide 4 sous forme de jet ou sous forme de goutte à goutte.

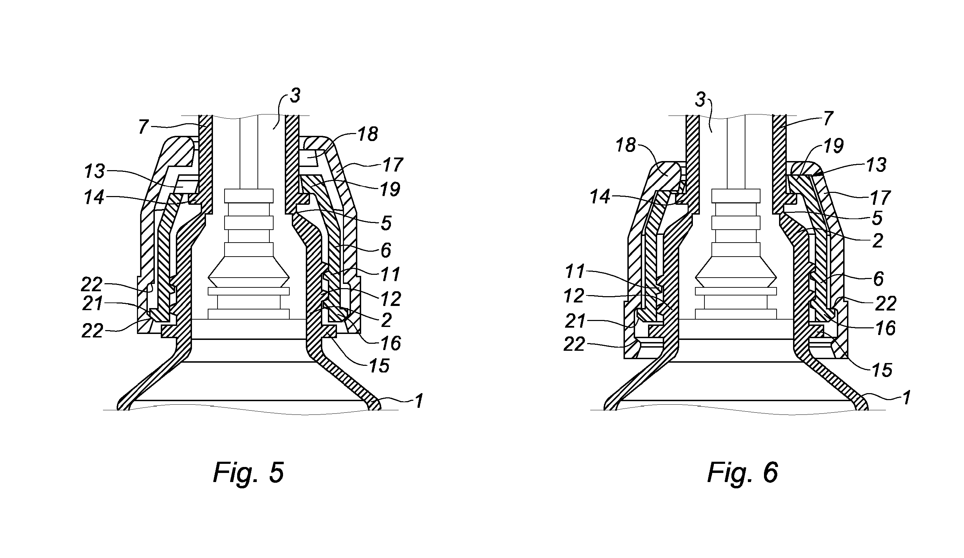

Comme illustré aux figures 1 à 6, l'obturateur 7 est configuré pour obturer l'embout 3. L'obturateur 7 présente notamment une forme de capuchon oblong recouvrant la surface extérieure de l'embout 3. L'obturateur 7 est relié au col 2 par une zone sécable 5, l'ensemble étant formé par une seule pièce de matière polymérique obtenue par injection. La zone sécable 5 est notamment formée par un rétreint comportant une épaisseur amincie de matière (figures 5 et 6). Il est alors possible de rompre manuellement la zone sécable 5 entre le col 2 et l'obturateur 7 de sorte à libérer l'embout 3 qui peut alors délivrer le fluide 4.

Comme illustré sur les figures, l'organe de retenue 6 est configuré pour retenir l'obturateur 7 dans une position d'obturation de l'embout 3. L'organe de retenue 6 comporte des moyens de fixation par rotation tels qu'un filetage 11 adapté pour coopérer avec des moyens de fixation complémentaires tel qu'un filetage complémentaire 12, prévus sur le col 2. L'organe de retenue 6 est ainsi monté de façon mobile sur l'obturateur 7. L'organe de retenue 6 est également configuré de sorte à recouvrir la zone sécable 5 lorsqu'il est fixé au col 2. L'organe de retenue 6 présente en effet une forme de bague dont la hauteur permet de recouvrir la zone sécable 5 entre le col 2 et l'obturateur 7. Ainsi, initialement en position fixée sur le col 2, l'organe de retenue 6 recouvre la zone sécable 5 encore intacte de sorte à la protéger d'une rupture accidentelle. Lors de la première utilisation, l'organe de retenue 6 est retiré du col 2 de sorte à pouvoir rompre la zone sécable 5 et retirer l'obturateur 7. Après utilisation, l'obturateur 7 est replacé sur l'embout 3 et l'organe de retenue 6 est refixé sur le col 2 en retenant l'obturateur 7 dans sa position d'obturation de l'embout 3. En effet, comme illustré aux figures 1 à 4, l'organe de retenue 6 comprend un épaulement 13 et l'obturateur 7 comprend deux butées primaires 14 configurées pour délimiter la course de l'épaulement 13 lorsque l'organe de retenue 6 est retiré du col 2. Ainsi, l'organe de retenue 6 est maintenu mobile entre les deux butées primaires 14 sur l'obturateur 7 avec une amplitude permettant de découvrir la zone sécable 5.

Comme illustré aux figures 3 et 4, le col 2 comprend en outre une nervure 15 et l'organe de retenue 6 comprend une portion d'extrémité 16 configurée pour venir en butée contre la nervure 15 indiquant à l'utilisateur que l'organe de retenue 6 a atteint sa position de fixation. Lorsque les moyens de fixation de l'organe de retenue 6 et du col 2 sont des filetages 11,12 comme représentés, la nervure 15 limite la course du vissage sur le col 2.

Comme illustré aux figures 1 à 4, l'ampoule 100 comprend de façon optionnelle un organe de sécurité 17 évitant que les enfants puissent avoir accès au fluide 4. L'organe de sécurité 17 est monté mobile en rotation sur l'obturateur 7 et configuré de sorte à couvrir l'organe de retenue 6, l'organe de sécurité 17 et l'organe de retenue 6 étant mobiles en rotation l'un par rapport à l'autre entre une position d'accouplement dans laquelle l'organe de sécurité 17 est solidaire en rotation avec l'organe de retenue 6 et une position de désaccouplement dans laquelle l'organe de sécurité 17 est libre en rotation et tourne dans le vide.

Comme illustré en détail aux figures 5 et 6, l'organe de sécurité 17 comprend une première couronne 18 de créneaux et l'organe de retenue 6 comprend une seconde couronne 19 de créneaux chanfreinées, la seconde couronne 19 étant configurée pour coopérer avec la première couronne 18 et pouvoir s'engrener l'une avec l'autre. Ceci entraine le déplacement de l'organe de sécurité 17 et de l'organe de retenue 6 de la position de désaccouplement à une position d'accouplement. En utilisation, l'organe de sécurité 17 initialement situé en position de désaccouplement est déplacé en rotation par rapport à l'organe de retenue 6 de sorte que la première couronne 18 de créneaux puisse coopérer avec la seconde couronne 19 de créneaux. Une pression axiale appliquée sur l'organe de sécurité 17 vers l'organe de retenue 6 permet alors la coopération des créneaux entre eux générant un engrènement de sorte que l'organe de sécurité 17 coopère avec l'organe de retenue 6 dans une position d'accouplement. La rotation dans la direction anti horaire de l'organe de sécurité 17 permet ensuite le dévissage de l'organe de retenue 6 du col 2, autorisant l'accès à l'obturateur 7. Cette configuration présente une sécurité car si un enfant souhaitait dégager l'embout 3 de l'ampoule 100 à partir de la position d'accouplement, il effectuerait un mouvement classique pour l'ouverture d'un flacon consistant à effectuer une traction sur l'organe de sécurité 17 en même temps qu'une rotation anti horaire de dévissage. Or ce mouvement de traction a pour effet de déplacer l'organe de sécurité 17 en position de désaccouplement de l'organe de retenue 6 de sorte que l'organe de sécurité 17 tourne dans le vide.

Selon une variante de réalisation non illustrée, l'engrènement de l'organe de sécurité 17 et de l'organe de retenue 6 est rendu possible par la présence d'au moins un créneau sur l'un des deux organes et au moins une encoche prévue sur l'autre des deux organes et configurée de sorte à permettre l'engrènement du créneau.

Comme détaillé sur les figures 5 et 6, l'organe de retenue 6 retient l'organe de sécurité 17 par une portion d'extrémité 16 comportant un élément saillant 21 configuré pour venir en butée contre des butées secondaires 22 prévues sur l'organe de sécurité 17. Ces butées secondaires 22 permettent également de délimiter la course de l'organe de sécurité 17 lorsqu'un effort de traction ou de pression y est exercé pour un déplacement entre la position accouplée et la position désaccouplée.

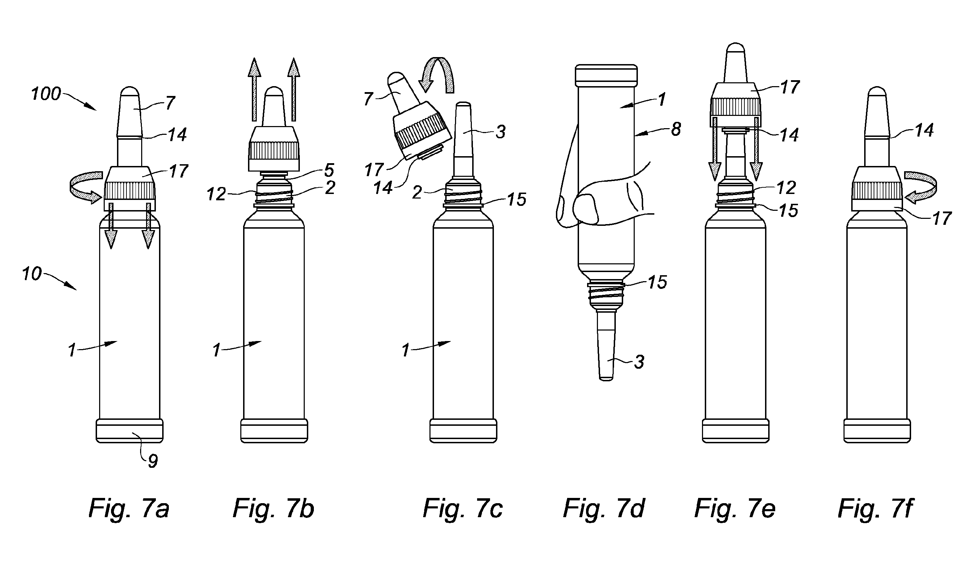

Les figures 7a à 7f décrivent un exemple d'utilisation de l'ampoule 100 selon l'invention. Comme illustré à la figure 7a, une pression axiale appliquée sur l'organe de sécurité 17 permet le déplacement de l'organe de sécurité 17 et de l'organe de retenue 6 de la position de désaccouplement à la position d'accouplement par engrenage. Un mouvement de rotation transmis à l'organe de sécurité 17 permet le dévissage de l'organe de retenue 6 solidaire en rotation. Comme illustré à la figure 7b, il est alors possible de déplacer les organes de retenue 6 et de sécurité 17 par coulissement sur l'obturateur 7 jusqu'à ce que l'épaulement 13 de l'organe de retenue 6 recouvert par une portion de l'organe de sécurité 17 vienne en butée contre la butée primaire 14 supérieure de l'obturateur 7. Dans cette configuration, la zone sécable 5 reliant l'obturateur 7 au col 2 est découverte. Une contrainte appliquée manuellement sur la zone sécable 5 permet la rupture et le détachement de l'obturateur 7 sur lequel l'organe de retenue 6 et l'organe de sécurité 17 sont maintenus (figure 7c). Comme illustré à la figure 7d, l'ampoule 100 est placée tête en bas et une pression sur la paroi latérale 8 du réservoir 1 permet la délivrance de fluide 4 par l'embout 3 dégagé. Puis, l'obturateur 7 est repositionné sur le col 2 de sorte à obturer l'embout 3 (figure 7e). L'organe de retenue 6 en position d'accouplement avec l'organe de sécurité 17 est revissé sur le filetage 12 du col 2 maintenant l'obturateur 7 dans sa position d'obturation de l'embout 3. Le transport de l'ampoule 100 est alors possible sans risque de perte de fluide 4 (figure 7f).

Ainsi, la présente invention propose une ampoule 100 pour contenir et délivrer un fluide 4, qui est refermable pour garantir la longévité du fluide 4, faciliter son transport après ouverture, et qui est simple à fabriquer.

Il va de soi que l'invention n'est pas limitée au mode de réalisation décrit ci-dessus à titre d'exemple mais qu'elle comprend tous les équivalents techniques et les variantes des moyens décrits ainsi que leurs combinaisons.

## Revendications

1. Ampoule (100), destinée à stocker et délivrer un fluide (4), l'ampoule (100) comprenant :
- un corps (10) définissant un réservoir (1) destiné à contenir le fluide (4), le corps (10) comprenant un col (2) et un obturateur (7) relié au col par une zone sécable (5),
- un embout (3) destiné à permettre la délivrance du fluide (4) contenu dans le réservoir (1) hors de l'ampoule (100), l'embout (3) étant fixé à l'intérieur du col (2), l'obturateur (7) étant configuré pour obturer l'embout (3), et
- un organe de retenue (6) configuré pour retenir l'obturateur (7) dans une position d'obturation de l'embout (3) après rupture de la zone sécable (5), l'organe de retenue (6) étant configuré pour coopérer avec le col (2) de sorte à être fixé de façon amovible au col (2).

2. Ampoule (100), selon la revendication 1, dans laquelle l'organe de retenue (6) est monté mobile sur l'obturateur (7).

3. Ampoule (100), selon l'une des revendications 1 à 2, dans laquelle l'organe de retenue (6) est monté mobile sur l'embout (3).

4. Ampoule (100), selon l'une des revendications 1 à 3" dans laquelle l'organe de retenue (6) comprend des moyens de fixation agencés pour coopérer avec des moyens de fixation complémentaires du col (2) de sorte à fixer par rotation l'organe de retenue (6) au col 2.

5. Ampoule (100) selon l'une des revendications 1 à 4, dans laquelle l'organe de retenue (6) est configuré pour recouvrir la zone sécable (5) de sorte à protéger la zone sécable (5) d'une rupture involontaire.

6. Ampoule (100) selon l'une des revendications 1 à 5, dans laquelle l'obturateur (7) comprend deux butées primaires (14) et dans laquelle l'organe de retenue (6) comprend un épaulement (13) agencé pour coopérer successivement avec chacune deux butées primaires (14) de sorte que l'organe de retenue (6) monté sur l'obturateur (7) est mobile en translation entre les deux butées primaires (14) par rapport à l'obturateur (7) de sorte à découvrir la zone sécable (5).

7. Ampoule (100) selon l'une des revendications 1 à 6, comprenant en outre un organe de sécurité (17) monté libre en rotation sur l'obturateur (7) et configuré pour couvrir l'organe de retenue (6), l'organe de sécurité (17) et l'organe de retenue (6) étant mobiles en rotation l'un par rapport à l'autre entre une position d'accouplement, dans laquelle l'organe de sécurité (17) est solidaire de l'organe de retenue (6), et une position de désaccouplement, dans laquelle l'organe de sécurité (17) est libre en rotation par rapport à l'organe de retenue (6).

8. Ampoule (100) selon la revendication 7, dans laquelle l'organe de sécurité (17) comprend au moins un créneau et dans laquelle l'organe de retenue (6) comprend au moins une encoche configurée pour coopérer avec le créneau, de sorte que l'application d'une pression sur l'organe de sécurité (17) suivant une direction axiale orientée vers l'organe de retenue (6) entraîne l'engrènement du créneau et de l'encoche et entraine le déplacement de l'organe de sécurité (17) et de l'organe de retenue (6) de la position de désaccouplement à la position d'accouplement.

9. Ampoule (100) selon l'une des revendications 7 à 8, dans laquelle l'organe de sécurité (17) comporte deux butées secondaires (22) et dans laquelle la portion d'extrémité (16) de l'organe de retenue (6) comporte un élément saillant (21) configuré pour coopérer successivement avec chacune deux butées secondaires (22) de sorte à délimiter le déplacement dans une direction axiale de l'organe de sécurité (17) par rapport à l'organe de retenue (6) entre la position d'accouplement et la position de désaccouplement.

10. Ampoule (100) selon l'une des revendications 1 à 9, dans laquelle le corps (10) comprend au moins une paroi latérale (8) faiblement déformable et une paroi de fond (9) encliquetée sur la au moins une paroi latérale (8) et dans laquelle l'embout (3) est en matériau fortement déformable tel que l'élastomère thermoplastique TPE.

11. Ampoule (100) selon l'une des revendications 1 à 9 dans laquelle le corps (10) comprend au moins une paroi latérale (8) fortement déformable comportant une portion d'extrémité (16) soudée sur elle-même de sorte à obturer le fond du corps 10.

12. Ampoule (100) selon l'une des revendications 1 à 11, dans laquelle l'obturateur (7) et la au moins une paroi latérale (8) du corps (10) sont formés par une seule pièce de matière polymérique obtenue par injection et dans laquelle la zone sécable (5) est un rétreint comportant une épaisseur amincie de matière.

13. Ampoule (100) selon l'une des revendications 1 à 9, dans laquelle le corps (10) comprend au moins une paroi latérale (8) très faiblement déformable, tel que du verre, et une paroi de fond (9) fortement déformable.
